Europäisches Patentamt

European Patent Office

Office européen des brevets

(11) Veröffentlichungsnummer: **0 275 867**
**A1**

(12) **EUROPÄISCHE PATENTANMELDUNG**

(21) Anmeldenummer: 88100038.4

(22) Anmeldetag: 05.01.88

(51) Int. Cl.4: **B23Q 1/26** , F16C 29/04

(30) Priorität: 08.01.87 DE 3700314

(43) Veröffentlichungstag der Anmeldung:
27.07.88 Patentblatt 88/30

(84) Benannte Vertragsstaaten:
AT BE CH DE ES FR GB GR IT LI NL SE

(71) Anmelder: **Friedrich Graepel AG**
**Friedrich-Graepel-Damm**
**D-4573 Löningen(DE)**

(72) Erfinder: **Böning, Manfred**
**Hermann-Ehlers-Strasse 6/81**
**Reutlingen 1(DE)**

(74) Vertreter: **Busse & Busse Patentanwälte**
**Postfach 1226**
**D-4500 Osnabrück(DE)**

(54) Vorrichtung zur geradlinigen Bewegung von Teilen oder Gegenständen.

(57) Es ist eine Vorrichtung zur geradlinigen Bewegung von Teilen oder Gegenständen beschrieben, die zum Beispiel bei Werkzeug-und Arbeitsmaschinen, Verpackungs-oder Füllmaschinen und allgemein im Zusammenhang mit automatiesierten Fertigungsabläufen zur Handhabung von Werkstücken und Gegenständen Anwendung finden kann, deren Position im Zuge vorzunehmender Bearbeitungen oder Behandlungen entlang einer geradlinigen Bewegungsbahn zu verändern ist. Die Vorrichtung umfaßt einen Laufwagen 1;1' mit Laufrollen 6 und zumindest eine Führungsschiene 10, die zur Erzielung einer exakten, spieleinstellbaren, drehstabilen Führung so in bezug auf eine eine Symmetrieebene 16 definierende Querebene des Laufwagens 1;1' angeordnet, ist, das ihre Führungsflächen 11 jeweils einen Winkel von vorzugsweise 45° mit der Symmetrieebene 16 einschließen. Die Laufrollen 6 sind dabei für ihren Rolleingriff mit zwei winklig aneinandergrenzenden Führungsflächen 11 paarweise beidseits der Symmetrieebene 16 drehbar am Laufwagen 1;1' abgestützt.

Fig. 1

Xerox Copy Centre

## Vorrichtung zur geradlinigen Bewegung von Teilen oder Gegenständen

Die Erfindung betrifft eine Vorrichtung zur geradlinigen Bewegung von Teilen oder Gegenständen nach dem Oberbegriff des Patentanspruchs 1.

Derartige Vorrichtungen finden als sog. Linearführung in der Technik vielfältige Verwendung, z.B. bei Werkzeug-und Arbeitsmaschinen, bei denen die Position von Werkstücken im Zuge vorzunehmender Bearbeitungen oder Behandlungen entlang einer geradlinigen Bewegungsbahn zu verändern ist, oder auch bei Verpackungs-oder Füllmaschinen, bei denen ebenfalls derartige Bewegungsabläufe im Zusammenhang mit dem Verpacken oder Befüllen von Gegenständen auftreten. Dabei kann der Laufwagen derartiger Linearführungen auch mit Hubgeräten und/oder einem Drehtisch kombiniert sein, wie es insbesondere bei automatisierten Fertigungsabläufen in Fertigungsstraßen zur Handhabung von Werkstücken in den verschiedensten Positionen und Arbeitsstationen der Fall ist.

Die Abstützungs-und Führungseinrichtungen einschl. der Laufrollen des Laufwagens geben bei den bekannten Linearführungen häufig Anlaß zu Funktionsstörungen aufgrund ungenauer Führungseigenschaften der Laufrollen, die ein unerwünschtes Bewegungsspiel in die Führungseinrichtung eintragen oder deren Leichtgängigkeit herabsetzen. Insbesondere ist hierbei die Einhaltung enger Toleranzen, wie sie bei präzisen Bewegungsabläufen in der Handhabungs-und Bewegungstechnik gefordert werden, nur mit hohem Zeit-und Konstruktionsaufwand erreichbar, mit der Folge, daß die bekannten Linearführungen relativ groß bauen.

Der Erfindung liegt in erster Linie die Aufgabe zugrunde, eine Vorrichtung zur geradlinigen Bewegung von Teilen oder Gegenständen der eingangs angegebenen Art zu schaffen, die mit einfachen Mitteln und in kompakter Bauweise dem Laufwagen exakte, im wesentlichen spielfreie Bewegungsabläufe mit der gebotenen Leichtgängigkeit vermittelt.

Diese Aufgabe wird nach der Erfindung durch eine Ausgestaltung der Vorrichtung gemäß dem Patentanspruch 1 gelöst. Durch die besondere Anordnung der Führungsschiene oder -schienen in bezug auf die definierte Symmetrieebene der Führungseinrichtung und die entsprechende Anstellung der Laufrollen an die jeweiligen Führungsflächen ist eine besonders kompakte Vorrichtung geschaffen, die dem Laufwagen mit einfachen Mitteln exakte Bewegungsabläufe mit großer Leichtgängigkeit bei den verwendeten Laufrollen vermittelt. Die verwendeten Laufrollen haben zudem eine hohe Abstützungsgenauigkeit durch ihre eindeutige Kinematik und Geometrie, was die Aufnahme hoher Dreh-und Kippmomente bei weitgehender Spielfreiheit im Bewegungsablauf des Laufwagens erlaubt und diesem im Verein mit den winklig zueinander stehenden Führungsflächen der Führungseinrichtung eine hohe Drehstabilität vermittelt.

Zahlreiche weitere Merkmale und Vorteile der Erfindung ergeben sich aus den Unteransprüchen und der nachstehenden Beschreibung in Verbindung mit der Zeichnung, in der mehrere Ausführungsbeispiele des Gegenstands der Erfindung schematisch veranschaulicht sind. In der Zeichnung zeigen:

Fig. 1 einen Vertikalschnitt durch eine erfindungsgemäße Vorrichtung nach einem ersten Auführungsbeispiel, bei der der Laufwagen mit einer einzigen zentralen Führungsschiene als Führungseinrichtung zusammenwirkt,

Fig. 2 eine Draufsicht auf einen stirnseitigen Endbereich der Führungseinrichtung gemäß Fig. 1,

Fig. 3 einen Horizontalschnitt durch den stirnseitigen Endbereich der Führungseinrichtung zur Veranschaulichung einer Abwandlung,

Fig. 4 eine Darstellung ähnlich Fig. 1 zur Veranschaulichung einer weiteren abgewandelten Ausführungsform in Verbindung mit einer Antriebsvorrichtung für den Laufwagen,

Fig. 5 einen Vertikalschnitt durch eine Führungseinrichtung mit zwei parallelen Führungsschienen,

Fig. 6 eine Darstellung entsprechend Fig. 5 zur Veranschaulichung weiterer Einzelheiten der zweischienigen Führungseinrichtung,

Fig. 7 ein weiteres Ausführungsbeispiel einer einschienigen Führungseinrichtung in einer Darstellung entsprechend Fig. 1,

Fig. 8 eine teilweise geschnittene Ansicht von unter in das Innere des Laufwagens zur Veranschaulichung einer abgewandelten Ausführungsform des Laufwagens,

Fig. 9 eine Seitenansicht zur der Laufwagendarstellung gemäß Fig. 8,

Fig. 10 eine Einzelheit der Laufrollenlagerung in größerem Maßstab und,

Fig. 11 u. 12 wiederum in größerem Maßstab, zwei verschiedene Ausführungsformen der Laufrollen.

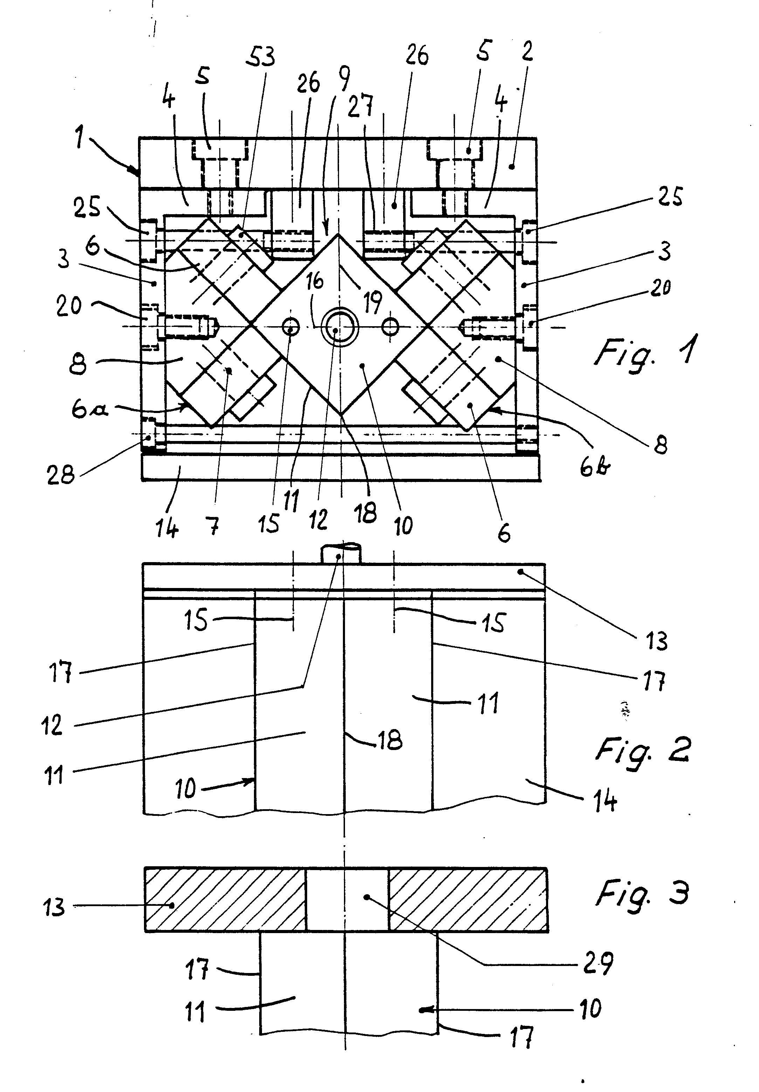

Wie sich zunächst aus Fig. 1 ergibt, umfaßt der als Ganzes mit 1 bezeichnete Laufwagen der dargestellten Vorrichtung zur geradlinigen Bewegung von Teilen oder Gegenständen eine obere Verbindungsplatte 2 für zwei einander gegenüberliegende Seitenwände 3 in Form winkelförmiger Tragplatten, deren senkrechte Schenkel die Seitenwände 3 bilden, während ihre waagerechten Schenkel 4 jeweils über Klemmschrauben 5 mit der Verbindungsplatte 2 fest verbunden sind. In den beiden stirnseitigen Endbereichen des Laufwagens 1 sind jeweils zwei Paare 6a und 6b von Laufrollen 6 auf Lagerbolzen 7 über Rollenträger bzw. Lagerböcke 8 einander gegenüberliegend an den Seitenwänden 3 des Laufwagens 1 angebracht.

Zur Abstützung und Führung des Laufwagens 1 entlang einer geradlinigen Bewegungsbahn ist eine Führungseinrichtung 9 vorgesehen, die bei dem Ausführungsbeispiel gemäß Fig. 1 von einer einzigen, zentral in bezug auf den Laufwagen 1 angeordneten Führungsschiene 10 gebildet ist. Die Führungsschiene 10 ist entsprechend dem dargestellten Beispiel als Vierkantprofil mit quadratischem Querschnitt ausgeführt und besitzt vier von den entsprechend spezialbehandelten Außenflächen des Vierkantprofils gebildete Führungsflächen 11, die in einem Winkel α von 90° zueinander angeordnet sind.

An ihren beiden Enden ist die Führungsschiene 10 mittels je einer zentralen Befestigungsschraube 12 in einem vertikalen Endstück 13 festgelegt, das seinerseits auf eine Grundplatte 14 aufgesetzt und mit dieser fest verbunden ist. Beidseits der zentralen Befestigungsschraube 12 erstrecken sich Schrauben 15 als Drehsicherung für die Führungsschiene 10 durch das Endstück 13 in die angrenzende Stirnseite der Führungsschiene 10 hinein. Die Führungsschiene 10 ist dabei so in bezug auf eine eine Symmetrieebene 16 der Führungseinrichtung 9 bzw. der Führungsschiene 10 definierende Querebene des Laufwagens 1 angeordnet, daß ihre Führungsflächen 11 jeweils einen Winkel α/2 von bei dem dargestellten Beispiel 45° mit der Symmetrieebene einschließen, d.h. daß zwei einander gegenüberliegende Längskanten 17 der Führungsschiene 10 in der Symmetrieebene 16 der Führungseinrichtung 9 angeordnet sind, während die einander gegenüberliegenden Längskanten 18 in der die Symmetrieebene 16 - schneidenden vertikalen Längsmittelebene 19 des Laufwagens 1 angeordnet sind.

Die Laufrollen 6 der Laufrollenpaare 6a und 6b stehen mit den diesen jeweils zugeordneten Führungsflächen 11 in unmittelbar an die Symmetrieebene 16 angrenzenden Randbereichen beidseits der jeweiligen Längskante 17 der Führungsschiene 10 in Rolleingriff. Die Lagerbohrungen für die Laufrollen 6 sind zu diesem Zweck in dem gleichen Winkel wie die Führungsflächen 11 der Führungsschiene 10 im jeweiligen Lagerbock 8 angeordnet.

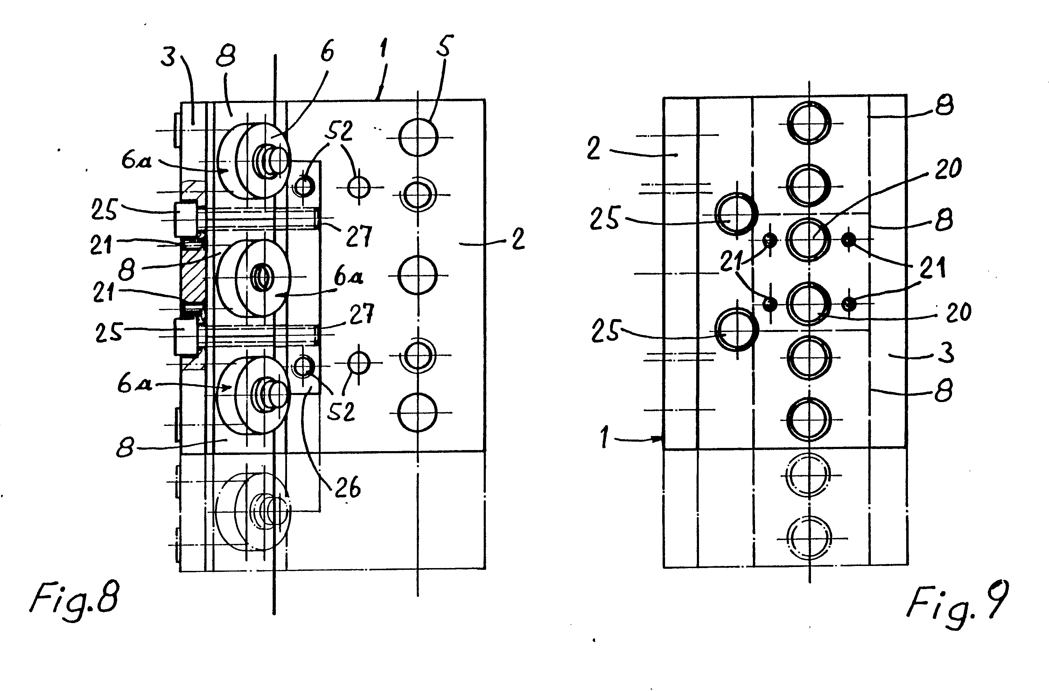

Die Lagerböcke 8, die jeweils die Laufrollen 6 jedes Laufrollenpaares 6a bzw. 6b frei drehbar abstützen, sind ihrerseits mit Hilfe von Verbindungsschrauben 20 lösbar an der jeweiligen Seitenwand 3 des Laufwagens 1 festgelegt. Für einen spielfreien Rolleingriff seines Laufrollenpaares 6a bzw. 6b mit den zugehörigen Führungsflächen 11 der Führungsschiene 10 ist jeder Lagerbock 8 gesondert an die Führungsschiene 10 zustellbar. Hierfür sind Einstellschrauben 21 (Fig. 8 - 10) vorgesehen, die in Form von Druckschraubenbolzen durch entsprechende Gewindebohrungen 22 in den Seitenwänden 3 hindurchgeschraubt und stirnseitig an die ihnen zugewandte rechteckige Rückseite 23 des Lagerbocks 8 angedrückt werden.

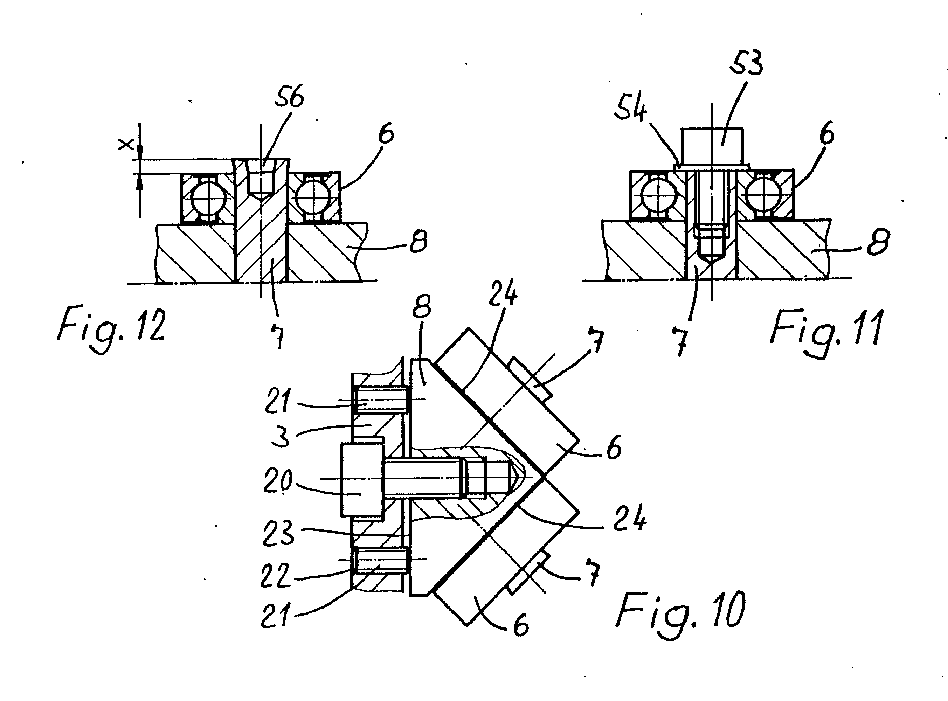

Die Anordnung der Verbindungsschrauben 20 und der Einstellschrauben 21 ist insbesondere aus den Fig. 9 und 10 ersichtlich. Demgemäß sind jeweils zwei Verbindungsschrauben 20 in einer mittleren Querebene des Lagerbocks 8 vorgesehen, während die Einstellschrauben 21 in der vier Eckbereichen des Lagerbocks 8 innerhalb dessen rechteckiger bzw. quadratischer Rückseitenkontur angeordnet sind. Zu der zur Seitenwand 3 parallelen, senkrechten Rückseite 23 des Lagerbocks sind dessen an die rückseitigen Stirnflächen der Laufrollen 6 angrenzenden beiden Vorderseiten 24 in einem Winkel beidseits der Symmetrieebene 16 des Laufwagens 1 angeordnet, der rechtwinklig zur Lagerbohrung der Laufrollen 6 bzw. zur jeweiligen Führungsfläche 11 der Führungsschiene 10 angeordnet ist.

Die Befestigungsschrauben 20 bewirken eine Klemmverbindung jedes einzelnen Lagerbocks 8 mit der zugehörigen Seitenwand 3 des Laufwagens 1. Bei gelöster Klemmverbindung kann, insbesondere beim ersten Zusammenbau der Vorrichtung, durch entsprechende Drehbetätigung jeder einzelnen Einstellschraube 21 eine Feineinstellung und exakte Zustellung jedes einzelnen Lagerbocks 8 mit seinen beiden Laufrollen 6 an die entsprechenden Führungsflächen 11 der Führungsschiene 10 erreicht werden, wie es beispielsweise zum Ausgleich geringfügiger, fertigungsbedingter Durchmesserdifferenzen der Laufrollen 6 erforderlich ist. Danach wird durch Anziehen der Verbindungsschrauben 20 die Klemmverbindung des Lagerbockes 8 mit der Seitenwand 3 des Laufwagens 1 unter Erhalt der mittels der sich rückseitig am Lagerbock 8 druckpunktartig abstützenden Einstellschrauben 21 gewonnenen spielfreien Zustellung der Laufrollen 6 an die Führungsschiene 10 hergestellt.

Der senkrechte Schenkel der die Seitenwände 3 des Laufwagens 1 jeweils bildenden Tragplatte ist durch Vorspannschrauben 25 mit je einem Gegenhalter 26 verbunden, die an die Innenseite der Verbindungsplatte 2 mit geringem Abstand von der mittleren Vertikalebene 19 des Laufwagens 1 angeschraubt sind. Die Gegenhalter 26 besitzen in ihren unteren Endbereichen Gewindebohrungen 27, mit denen die freien Enden der Vorspannschrauben 25 in Gewindeeingriff stehen. Auf jeder Laufwagenseite 3 sind beispielsweise zwei ·Vorspannschrauben 25 in einer gemeinsamen Horizontalebene vorgesehen. In entsprechender Weise sind Vorspannschrauben 28 in den an die Grundplatte 14 angrenzenden unteren Endbereichen der Seitenwände 3 vorgesehen, die diese miteinander verbinden.

Nach einem Lösen der Klemmschrauben 5 können durch entsprechende Drehbetätigung der Vorspannschrauben 25 und 28 die Seitenwände 3 mitsamt ihren Lagerböcken 8 und den von diesen abgestützten Laufrollen 6 in bezug auf die Laufschiene 10 vor-und zurückbewegt werden, um, insbesondere bei längerer Benutzungsdauer der Vorrichtung, etwaigen Laufrollenverschleiß schnell und einfach auszugleichen. Für einen solchen Verschleißausgleich wird in der Regel eine stärkere Zustellung der einander gegenüberliegenden Laufrollenpaare 6a, 6b insgesamt an die Laufschiene 10 in Betracht kommen. Neben der einfachen Spieleinstellbarkeit der Laufrollenpaare 6a, 6b bzw. der Veränderung ihrer Vorspannung in bezug auf die Laufschiene 10 dienen die Vorspannschrauben 25 und 28 als Zugtraversen zur Aufnahme von Spreizkräften. Für die Kraftaufnahme günstig erweist sich die mit Hilfe der Gegenhalten 26 von der oberen Verbindungsplatte 2 tiefer gelegt Verbindungsebene der Vorspannschrauben 25.

Nach einer vorgenommenen Spieleinstellung oder Veränderung der Vorspannung werden die Klemmschrauben 5 wieder angezogen, die in ihren Durchgangsbohrungen in der Verbindungsplatte 2 mit seitlichem Spiel zur Aufnahme der mit den Einstellvorgängen einhergehenden geringen Positionsveränderungen ihrer zugehörigen Gewindebohrungen im waagerechten Teil 4 der Seitenwände 3 geführt sind.

Sofern die Führungseinrichtung 9 von der einzigen Führungsschiene 10 gebildet ist, kann diese entsprechend der in Fig. 3 gezeigten Variante für eine einfache Winkelverstellung der Laufebene des Laufwagens gegenüber der Horizontalen in ihren beiden Endbereichen schwenkbar gelagert sein, imdem an die beiden Stirnenden der Führungsschiene 10 jeweils ein Schwenkzapfen 29 angeformt ist, der in dem jeweiligen Endstück 13 drehbar abgestützt ist. Die Festsetzung der Führungsschiene 10 in der eingestellten Winkelstellung erfolgt über nicht dargestellte Verriegelungsmittel.

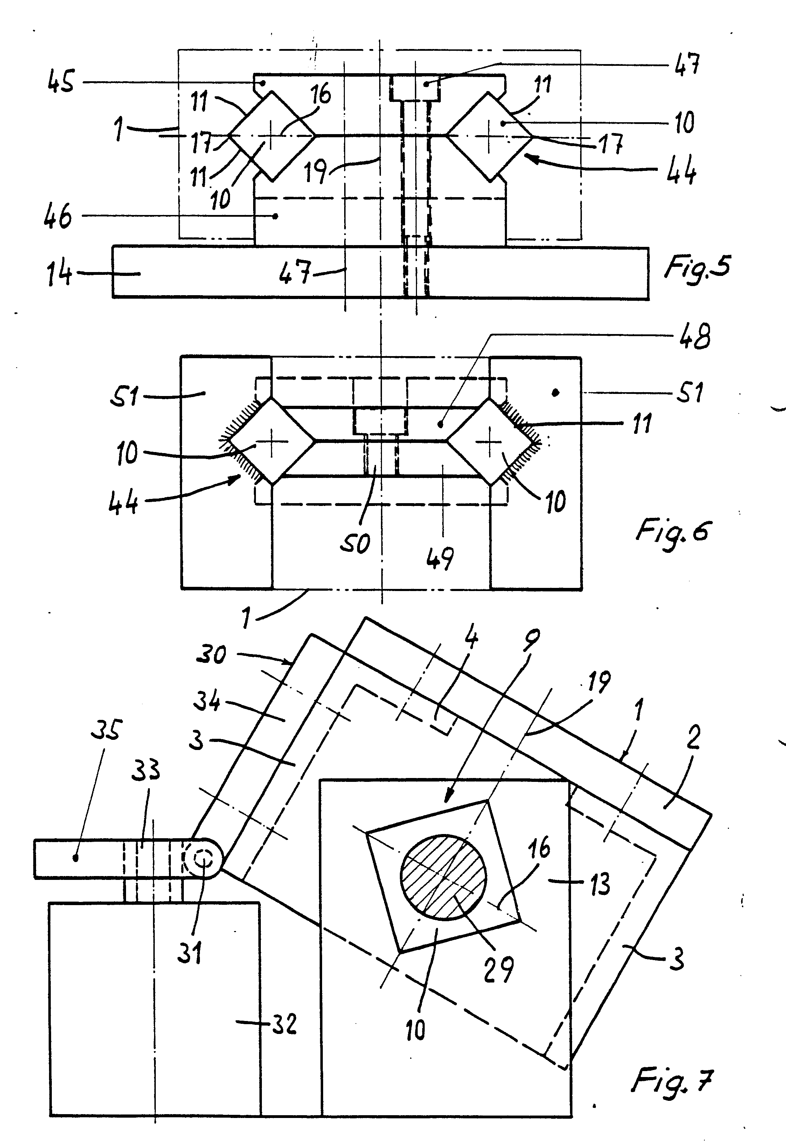

In Fig. 7 ist ein in dieser Weise durch Winkelverstellung der Führungsschiene 10 gegenüber der Horizontalen geneigter Laufwagen 1 dargestellt. Hierbei ist eine scharnierförmige Mitnahmevorrichtung 30 mit einer Scharnierachse 31 vorgesehen, über die der Laufwagen 1 für seine geradlinige Bewegung entlang der Führungsschiene 10 mit einem Antrieb 32 verbunden ist. Der Antrieb 32 kann jede beliebige geeignete Ausführung für eine Linearbewegung des Laufwagens 1 aufweisen und für die Kraftabgabe insbesondere Riemen, Spindeln oder dgl. Zug-bzw. Druckelemente umfassen, mit denen ein entsprechendes Mitnahmeorgan 33 der Mitnahmevorrichtung 30 in Mitnahmeeingriff steht. Die Mitnahmevorrichtung 30 umfaßt ein Scharnierteil 34, das am Laufwagen 1 angeschraubt ist, und ein Scharnierteil 35, an dem das Mitnahmeorgan 33 befestigt ist. Die entsprechend der gewünschten, gegenüber der Horizontalen geneigten Laufbahn des Laufwagens 1 eingestellte Winkelposition der Schnarnierteile 34 und 35 wird für den Betrieb der Vorrichtung durch nicht näher dargestellte Verriegelungsmittel fixiert.

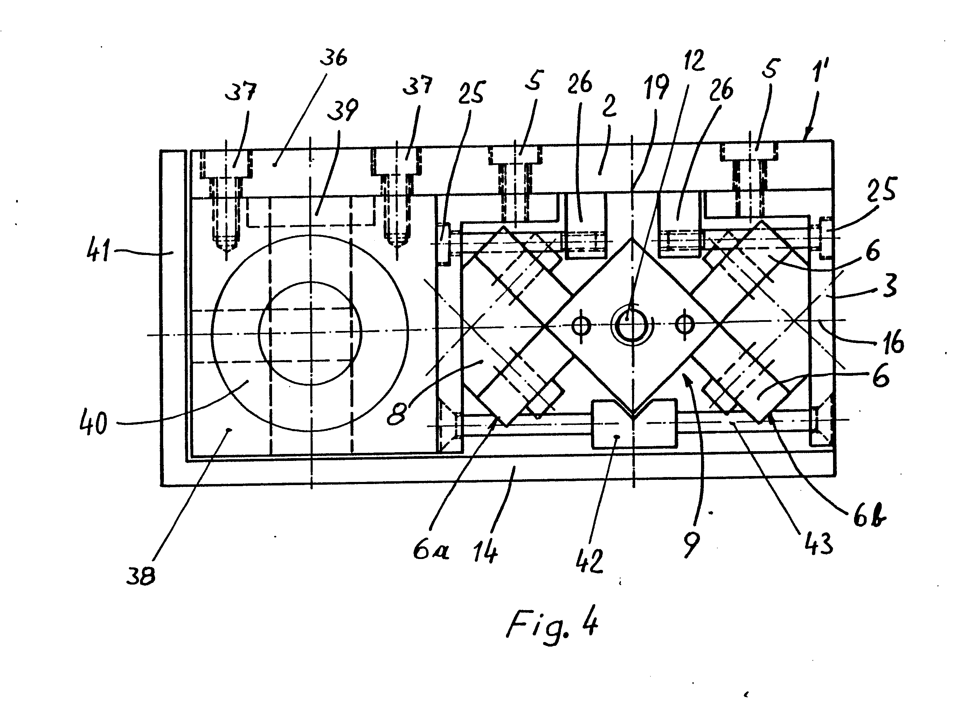

Die Fig. 4 veranschaulicht eine Variante 1' des Laufwagens mit horizontaler Laufbahn, wobei dessen obere Verbindungsplatte 2 einen einseitigen Verlängerungsbereich 36 aufweist, der unterseitig durch Schrauben 37 mit einer Mitnahmevorrichtung 38 verschraubt ist. Die Mitnahmevorrichtung 38 umfaßt ein Mitnahmeorgan 39, das wiederum mit einem geeigneten Antrieb 40 in Mitnahmeverbindung für die lineare Bewegung des Laufwagens 1' entlang der Führungsschiene 10 steht. Die Grundplatte 14 ist bei diesem Ausführungsbeispiel mit einer vertikalen Seitenwand 41 versehen. Im übrigen entspricht der Laufwagen 1' in allen wesentlichen Einzelheiten dem Laufwagen 1 gem. Fig. 1, wobei lediglich noch anstelle der durchgehenden Spannschrauben 28 des Laufwagens 1 im vorliegenden Beispiel der Laufwagen 1' mit einem mittleren unteren Doppelgegenhalter 42 versehen ist, mit dem die Gewindeenden paarweise einander gegenüberliegender Spannschrauben 43 entsprechend den Spannschrauben 25 zusammenwirken.

Die Fig. 5 und 6 veranschaulichen eine Ausgestaltung einer Führungseinrichtung 44 mit zwei parallelen Führungsschienen 10, die mit gleichen Abständen beidseits der mittleren Vertikalebene 19 angeordnet sind. Der Laufwagen 1 ist hierbei nur strichpunktiert angedeutet. Als Führungsflächen 11 kommen jeweils nur die beiden äußeren Seitenflächen jeder Führungsschiene 10 zum Einsatz mit den entsprechenden Laufrollenpaaren 6a und 6b. Mittels entsprechend profilierter oberer und unterer Klemmleisten 45 und 46, die die Führungsschienen 10 mit Ausnahme der den Laufrollen 6 zugeordneten äußeren Führungsflächen 11 umgreifen, sind die Führungsschienen 10 mittels Klemmschrauben 47 an der Grundplatte 14 festgespannt. Bei Bedarf können die Führungsschienen 10, beispielsweise nach längerer Benutzungsdauer, gewendet werden, um zurvor nicht benutzte Seitenflächen der Führungsschienen 10 als Führungsflächen 11 mit den Laufrollen 6 des Laufwagens 1 in Rolleingriff zu bringen. Ggf. können auch bei der Führungseinrichtung 9 mit nur einer einzigen Führungsschiene 10 entsprechende Vorkehrungen getroffen werden, um die Führungsschiene 10 für eine gleichmäßige Abnutzung der Führungsflächen 11 zu wenden.

Aus Fig. 6 sind Momentstützen bzw. Abstandshalter in Form je einer oberen Klemmleiste 48 und einer unteren Klemmleiste 49 ersichtlich, die durch Klemmschrauben 50 unter innenseitiger Einfassung der Führungsschienen 10 miteinander verspannt und in den erforderlichen Abständen zur Abstandssicherung der Führungsschienen 10 vorgesehen werden. Je nach der Länge der Führungseinrichtung 44 sind im übrigen auch die Klemmleisten 45 und 46 außer in den Endbereichen der Führungseinrichtung 44 in entsprechenden Abständen zwischen den endseitigen Abstützungsbereichen je nach den auftretenden Belastungsfällen vorzusehen.

In Fig. 6 sind ferner seitliche Abstreifer 51 dargestellt, die in den stirnseitigen Endbereichen des Laufwagens 1 vorgesehen sind und mit den äußeren Führungsflächen 11 der Führungseinrichtung 44 bei der Bewegung des Laufwagens 1 in Gleiteingriff stehen. Die Abstreifer 51 bestehen beispielsweise aus elastischen Lappen mit einem die äußeren Führungsflächen 11 umfassenden Ausschnitt und sind ggf. an den Rändern des Ausschnitts bürstenartig ausgebildet. Durch die Abstreifer 51 werden im Betrieb der Vorrichtung die mit den Laufrollen 6 des Laufwagens 1 zusammenarbeitenden äußeren Führungsflächen 11 ständig von Staub und dgl. Verunreinigungen befreit.

Je zwei einander gegenüberliegende Laufrollenpaare 6a und 6b sind in den beiden stirnseitigen Endbereichen des Laufwagens 1 in der Regel als Minimumausstattung vorgesehen. In Abhängigkeit von der Länge des Laufwagens in Bewegungsrichtung und von den auftretenden Belastungsfällen können jedoch zwischen den endseitigen Laufrollenpaaren ein oder mehrere weitere einander gegenüberliegende Laufrollenpaare an den Seitenwänden 3 des Laufwagens 1 angebracht sein.

In den Fig. 8 und 9 ist ein Ausführungsbeispiel gezeigt, bei dem zwischen den beiden endseitigen Laufrollenpaaren 6a, 6b ein weiteres, mittleres Laufrollenpaar 6a, 6b vorgesehen ist, von dem, wie bei den endseitigen Laufrollenpaaren 6a, 6b, in Fig. 8 wegen der Beschränkung der Darstellung auf nur eine Symmetriehälfte des Laufwagens 1 nur eine Laufrolle 6 des Laufrollenpaares 6a dargestellt ist.

Auch die Laufrollen 6 der mittleren einander gegenüberliegenden Laufrollenpaare 6a und 6b sind jeweils an einem gesonderten Lagerbock 8 drehbar abgestützt, und sämtliche Lagerböcke 8 sind individuell mittels der Einstellschrauben 21 einstellbar und mittels der Verbindungsschrauben 20 in der eingestellten Stellung an der jeweiligen Seitenwand 3 festsetzbar, wie es bereits eingangs erläutert wurde. Außerdem sind die Seitenwände 3 in der ebenfalls schon beschriebenen Weise mittels der endseitig in die Gegenhalter 26 eingreifenden Vorspannschrauben 25 insgesamt unter entsprechender Mitnahme der Lagerböcke 8 mit ihren Laufrollen 6 als Ganzes verstellbar. In Fig. 8 sind bei 52 Verbindungsschrauben zur Befestigung der Gegenhalter 26 an der als Ganzes dargestellten Verbindungsplatte 2 gezeigt. Diese Konstruktion kann bei Bedarf verlängert werden, wie es in den Fig. 8 und 9 strichpunktiert veranschaulicht ist.

Die Laufrollen 6 können je nach dem Anwendungs-und Belastungsfall jeweils von einem Gleitlager, vorzugsweise jedoch von einem Wälzlager in gefetteter und abgedichteter Ausführung, ggf. mit verstärktem Außenring, zur Erzielung einer weitestgehenden Wartungsfreiheit gebildet sein. Dabei ist es vor allen Dingen auch entbehrlich, die Führungsschiene oder -schienen 10 mit einem Schmiermittelfilm zu versehen. In den Fig. 11 und 12 sind zwei Ausführungsformen von Wälzlager-Laufrollen 6 dargestellt, die jeweils mit ihrem Innenring auf dem zentralen Lagerbolzen 7 festgelegt sind.

Bei dem Ausführungsbeispiel gemäß Fig. 11 ist der Lagerbolzen 7 mit einem axialen Innengewinde versehen, und in dieses Innengewinde ist eine Befestigungsschraube 53 unter Zwischenlegung einer Unterlegscheibe 54 eingeschraubt. Die Unterlegscheibe 54 übergreift stirnseitig den Innenring 55 des Wälzlagers und bildet eine Axialsicherung für dieses.

Bei dem Ausführungsbeispiel gemäß Fig. 12 ist der Lagerbolzen 7 in seinem oberen Endbereich mit einem nach außen offenen, von einem Sackloch gebildeten axialen Hohlbereich 56 versehen und weist einen axialen Überstand x über die angrenzende Stirnfläche des Wälzlagers bzw. der Laufrolle 6 auf. Durch Aufweiten des axialen Überstands x mit Hilfe eines geeigneten in den von Hohlbereich 56 eingeführten Spreizwerkzeugs wird hier die äußere Axialsicherung des Wälzlagers gebildet. Durch den Aufspreizvorgang wird das Lagerspiel in radialer Richtung des Wälzlagers im Sinne einer Spielminimierung beeinflußt, wie es in Präzisionsanwendungsfällen zur Ausschaltung einer möglichen Spielursache erwünscht ist.

Die Laufrollen 6 bzw. die diese bildenden Wälzlager haben vorzugsweise eine zylindrische äußere Mantelfläche als Abrollfläche an der Führungseinrichtung, jedoch kann diese Abrollfläche ggf. auch von einer mehr oder weniger tonnenförmigen äußeren Mantelfläche der Laufrollen gebildet sein.

Bei der Ausführung mit nur einer Führungsschiene 10 ermöglicht es diese zentrale Anordnung, die Führungsschiene 10 als Halter für Antriebselemente zu benutzen, so daß diese Antriebe mit Elementen gemeinsam un dem Schwenkzapfen 29 geschwenkt werden können.

Obwohl in der vorstehenden Beschreibung von einer ortsfesten Führungseinrichtung 9 bzw. 44 ausgegangen worden ist, wobei dementsprechend der Laufwagen 1 entlang der Führungseinrichtung linearbeweglich ist, versteht sich, daß in einfacher kinematischer Umkehr der Laufwagen ortsfest angeordnet und Führungseinrichtung zum Laufwagen linearbeweglich sein kann.

## Ansprüche

1. Vorrichtung zur geradlinigen Bewegung von Teilen oder Gegenständen, bestehend aus einem Laufwagen mit Laufrollen sowie einer Abstützungs- und Führungseinrichtung für den Laufwagen, die von zumindest einer in einem Winkel $\alpha$ von vorzugsweise 90° zueinander angeordnete Führungsflächen umfassenden Führungsschiene gebildet ist, wobei die Laufrollen mit ihren zylindrischen Laufflächen mit einander gegenüberliegenden Führungsflächen der Führungseinrichtung in Abstützungsrolleingriff gehalten sind, dadurch gekennzeichnet, daß die oder jede Führungsschiene (10) so in bezug auf eine eine Symmetrieebene (16) der Führungseinrichtung (9;44) definierende Querebene des Laufwagens (1;1') angeordnet ist, daß ihre Führungsflächen (11) jeweils einen Winkel $\alpha/2$, vorzugsweise 45°, mit der Symmetrieebene (16) einschließen, und daß die Laufrollen (6) für ihren Rolleingriff mit zwei winklig aneinandergrenzenden Führungsflächen (11) paarweise beidseits der Symmetrieebene (16) frei drehbar am Laufwagen (1;1') abgestützt sind.

2. Vorrichtung nach Anspruch 1, dadurch gekennzeichnet, daß der Rolleingriff der Laufrollen (6) jedes Laufrollenpaares (6a,6b) mit den diesen jeweils zugeordneten Führungsflächen (11) in unmittelbar an die Symmetrieebene (16) angrenzenden Randbereichen der Führungsflächen (11) erfolgt.

3. Vorrichtung nach Anspruch 1 oder 2, dadurch gekenzeichnet, daß die oder jede Führungsschiene (10) eine Vierkantprofil mit quadratischem Querschnitt in einer solchen Ausrichtung in bezug auf den Laufwagen (1;1') aufweist, daß zwei einander gegenüberliegende Längskanten (17) des Vierkantprofils in der Symmetrieebene (16) der Führungseinrichtung (9;44) angeordnet sind.

4. Vorrichtung nach einem der Ansprüche 1 bis 3, dadurch gekennzeichnet, daß die Laufrollen (6) jedes Laufrollenpaares (6a,6b) an einem gemeinsamen Lagerbock (8) des Laufwagens (1;1') abgestützt sind und daß jeder Lagerbock (8) mittels Einstellschrauben (21) für einen spielfreien Rolleingriff seines Laufrollenpaares mit den zugehörigen Führungsflächen (11) gesondert an die jeweilige Führungsschiene (10) zustellbar ist.

5. Vorrichtung nach einem der Ansprüche 1 bis 4, dadurch gekennzeichnet, daß der Laufwagen (1;1') in Längsrichtung der Führungseinrichtung (9;44) einander gegenüberliegende stirnseitige Endbereiche und diese verbindende, ihrerseits einander gegenüberliegende Seitenwände (3) umfaßt und daß in jedem der beiden stirnseitigen Endbereiche je zwei Laufrollenpaare (6a,6b) einander gegenüberliegend und den Seitenwänden (3) des Laufwagens (1;1') angebracht sind.

6. Vorrichtung nach Anspruch 5, dadurch gekennzeichnet, daß im Bereich zwischen den Laufrollenpaaren (6a,6b) der stirnseitigen Endbereiche zumindest zwei weitere einander gegenüberliegende Laufrollenpaare (6a,6b) an den Seitenwänden (3) des Laufwagens (1;1') angebracht sind.

7. Vorrichtung nach Anspruch 5 oder 6, dadurch gekennzeichnet, daß die Seitenwände (3) des Laufwagens (1;1') jeweils von einer sämtliche Lagerböcke (8) der Laufrollenpaare (6a,6b) einer Laufwagenseite haltenden Tragplatte eingenommen sind, die mit Hilfe von anderenends mit laufwagenfesten Gegenhaltern (26) in Gewindeeingriff stehenden Stellschrauben (25) auf die ihnen zugewandten Führungsflächen (11) der Führungseinrichtung (9;44) zu-und von diesen zurückbewegbar sind.

8. Vorrichtung nach einem der Ansprüche 1 bis 7, dadurch gekennzeichnet, daß die Laufrollen (6) jeweils von einem auf einem zentralen Lagerbolzen (7) festgelegten Wälzlager gebildet sind.

9. Vorrichtung nach Anspruch 8, dadurch gekennzeichnet, daß der Lagerbolzen (7) mit einem axialen Innengewinde versehen und in das Innengewinde eine Befestigungsschraube (53) als Axialsicherung des Wälzlagers eingeschraubt ist.

10. Vorrichtung nach Anspruch 8, dadurch gekennzeichnet, daß der Lagerbolzen (7) in seinem oberen Endbereich mit einem nach außen offenen axialen Hohlbereich (56) versehen ist, einen axialen Überstand (x) über die angrenzende Stirnfläche des Wälzlagers aufweist und durch Aufweiten des axialen Überstands (x) im Hohlbereich (56) eine Axialsicherung des Wälzlagers bildet.

11. Vorrichtung nach einem der Ansprüche 1 bis 10, dadurch gekennzeichnet, daß der Laufwagen (1;1') über eine Mitnahmevorrichtung (30;38) mit einem Antrieb (32,40) zu seiner geradlinigen Bewegung entlang der Führungseinrichtung (9) verbunden ist.

12. Vorrichtung nach Anspruch 11, dadurch gekennzeichnet, daß der Laufwagen (1') mit einer seitlichen Verlängerung (36) versehen ist, an der die Mitnahmevorrichtung (38) mit ihrem Mitnahmeorgan (39) für den Antrieb (40) abgestützt ist.

13. Vorrichtung nach einem der Ansprüche 1 bis 11, dadurch gekennzeichnet, daß die Führungseinrichtung (9) von einer einzigen, in der vertikalen Längsmittelebene (19) des Laufwagens (1) verlaufenden Führungsschiene (10) gebildet ist, die endseitig für eine Winkelverstellung der Laufebene des Laufwagens (1) gegenüber der Horizontalen durch entsprechendes Verdrehen der Führungsschiene (10) schwenkbar gelagert und in der eingestellten Winkelstellung festsetzbar ist.

14. Vorrichtung nach den Ansprüchen 11 und 13, dadurch gekennzeichnet, daß die Mitnahmevorrichtung (30) scharnierförmig ausgebildet ist, wobei der eine Scharnierteil (34) am Laufwagen (1) befestigt ist und der andere Scharnierteil (35) das mit dem Antrieb (32) in Mitnahmeverbindung stehende Mitnahmeorgan (33) trägt.

15. Vorrichtung nach einem der Ansprüche 1 bis 12 dadurch gekennzeichnet, daß die Führungseinrichtung (44) zwei oder mehrere parallele Führungsschienen (10) umfaßt, die durch entsprechend profilierte Klemmleisten (45,46) auf einer Grundplatte (14) festgelegt sind.

16. Vorrichtung nach einem der Ansprüche 1 bis 15, dadurch gekennzeichnet, daß der Laufwagen (1) in seinen stirnseitigen Endbereichen mit seitlichen Abstreifern (51) versehen ist, die mit den mit den Laufrollen (6) jeweils zusammenwirkenden Führungsflächen (11) der Führungseinrichtung (9;44) bei der Bewegung des Laufwagens (1) in Gleiteingriff stehen.

Fig. 1

Fig. 2

Fig. 3

Fig. 4

0 275 867

Fig.5

Fig.6

Fig.7

Fig.8

Fig.9

0 275 867

56

6

X

8

Fig. 12

7

53

54

6

8

7

7

Fig. 11

8

24

7

21

3

6

20

23

24

22

7

21

6

Fig. 10

0 275 867

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X<br>Y<br>A | DE-A-3 508 143 (HAIMER)<br>* Anspruch 11; Figuren 3-5 *<br><br>--- | 1,2,4-6<br>,8,11<br>16<br>7,12 | B 23 Q 1/26<br>F 16 C 29/04 |
| X<br>A | DE-A-1 477 101 (ARNDT)<br>* Anspruch 1 *<br>* Anspruch 2 *<br>--- | 1-3<br><br>4 | |
| X<br>A | DE-A-1 477 603 (MÜLLER)<br>* Ansprüche 1,7-10 *<br>* Anspruch 15 *<br>--- | 1-3<br><br>4 | |
| X | FR-A-2 107 265 (WITZIG)<br>* Ansprüche 1,2 *<br>--- | 1,2,4 | |
| X | FR-A-2 527 965 (INDUSTRIA)<br>* Ansprüche 5,6; Figuren 4,5A,5B *<br>--- | 1,2 | |
| Y | DE-C- 883 985 (GEIGER)<br>--- | 16 | |
| A | GB-A- 623 652 (BECH)<br>* Anspruch 1 *<br>--- | 3 | RECHERCHIERTE SACHGEBIETE (Int. Cl.4)<br><br>B 23 Q |
| A | GB-A- 960 687 (PIERCE)<br>--- | 4 | |
| A | DE-C- 165 842 (NOE)<br>--- | 13 | |
| A | DE-C- 133 067 (MARXSOHN)<br>--- | 14 | |
| A | DE-A-2 251 203 (RÖHLING)<br>----- | 15 | |

Der vorliegende Recherchenbericht wurde für alle Patentansprüche erstellt

| Recherchenort | Abschlußdatum der Recherche | Prüfer |
|---|---|---|
| DEN HAAG | 11-04-1988 | DE GUSSEM J.L. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)